(19) Europäisches Patentamt
European Patent Office
Office européen des brevets

(11) Veröffentlichungsnummer: **0 358 036**
**A2**

(12) # EUROPÄISCHE PATENTANMELDUNG

(21) Anmeldenummer: **89115446.0**

(22) Anmeldetag: **22.08.89**

(51) Int. Cl.5: **C08G 18/38 , C08G 73/14 , C08L 79/08**

(30) Priorität: **03.09.88 DE 3829960**

(43) Veröffentlichungstag der Anmeldung: **14.03.90 Patentblatt 90/11**

(84) Benannte Vertragsstaaten: **DE FR GB IT**

(71) Anmelder: **BAYER AG**

**D-5090 Leverkusen 1 Bayerwerk(DE)**

(72) Erfinder: **Zecher, Wilfried, Dr.**
**Treptower Strasse 6**
**D-5090 Leverkusen 1(DE)**
Erfinder: **El-Sayed, Aziz, Dr.**
**Saarlauterner Strasse 39**
**D-5090 Leverkusen 1(DE)**
Erfinder: **Haese, Wilfried, Dr.**
**Hauweg 32**
**D-4050 Mönchengladbach(DE)**
Erfinder: **Köhler, Burkhard, Dr.**
**Virneburgstrasse 9**
**D-4150 Krefeld 11(DE)**
Erfinder: **Meyer, Rolf-Volker, Dr.**
**Buchheimer Strasse 23**
**D-4150 Krefeld(DE)**

(54) **Aliphatisch-aromatische Polyamidimide.**

(57) Die Erfindung betrifft aliphatisch-aromatische Polyamidimide und deren Verwendung zur Herstellung von Formkörpern.

EP 0 358 036 A2

## Aliphatisch-aromatische Polyamidimide

Die Erfindung betrifft aliphatisch-aromatische Polyamidimide und deren Verwendung zur Herstellung von Formkörpern. Es ist bekannt, daß aliphatisch-aromatische Polyamidimide durch Umsetzung von Polyisocyanaten mit cyclischen Polycarbonsäureanhydriden und Lactamen (DE-AS 1770202) oder Polyamiden (DE-AS 1956512) hergestellt werden können. Diese Polyamidimide besitzen besondere Eigenschaften wie hohe Erweichungstemperaturen und gute Elastizitätswerte und können als hochtemperaturbeständige Beschichtungen, z.B. auf dem Elektroisolierlack-Sektor oder als Thermoplaste Verwendung finden. Es ist weiterhin bekannt, daß aliphatisch-aromatische Polyamidimide durch Kondensation von Polyisocyanaten mit Trimellitimidocarbonsäuren erhalten werden. (Makromol. Chem. 183, 557 u. 571 [1982]).

Es wurde nun gefunden, daß aliphatisch-aromatische Polyamidimide, die durch Kondensation von organischen Diisocyanaten wie aliphatischen, aliphatisch-aromatischen und aromatischen Diisocyanaten mit Trimellitimidocarbonsäuren der Formel (I)

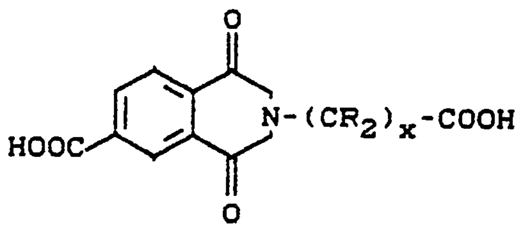

(I),

in welcher
R unabhängig voneinander für Wasserstoff (H), $C_1$-$C_6$-Alkyl steht,
x für die Zahl 1, 2, 3, 4, 5, 6, 7, 8, 9, 10, 11 oder 12 steht,
bei Temperaturen von 50 bis $380^\circ$ C, vorzugsweise von 70 bis $350^\circ$ C, erhalten werden, zu Formkörpern, insbesondere nach Spritzguß-Verfahren, verarbeitet werden können.

Die erfindungsgemäßen Formkörper zeichnen sich durch gute mechanische Werte wie Wärmeformbeständigkeit, Zähigkeit und gutes Fließverhalten bei der Verarbeitung aus.

Diese Eigenschaften sind als überraschend anzusehen, da nach dem in der Literatur beschriebenen Reaktionsverlauf in erheblichem Umfange Neben- und Vernetzungsreaktionen auftreten (Makromol. Chem. 183, 557 u. 571 [1982]).

Die für die Herstellung der erfindungsgmäßen Polyamidimide verwendbaren Trimellitimidocarbonsäuren sind z.B. aus Trimellitsäureanhydrid und den Lactamen oder Aminocarbonsäuren nach bekannten Verfahren zugänglich.

Sie können getrennt oder "in situ", z.B. durch Erhitzen von Trimellitsäureanhydrid mit einem Lactam und nachfolgende Zugabe der übrigen Komponenten, hergestellt werden. Die Trimellitimidocarbonsäuren entsprechen der Formel (I)

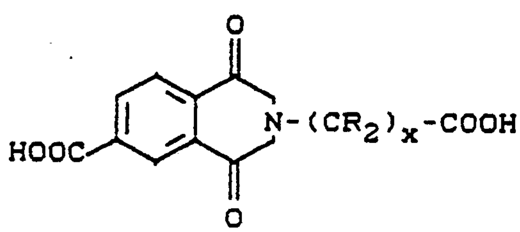

(I),

in welcher
R unabhängig voneinander für Wasserstoff (H), Alkylgruppen mit 1-6 C-Atomen steht und
x für die Zahl 1, 2, 3, 4, 5, 6, 7, 8, 9, 10, 11 oder 12 steht.

Bevorzugt entspricht x den Zahlen 5, 10 und 11, besonders bevorzugt wird Trimellitimidocapronsäure (x = 5) verwendet und/oder Trimellitimidocapronsäure (X = 10). Für die Herstellung der erfindungsgemäß eingesetzten Polyamidimide können Diisocyanate verwendet werden, wie sie beispielsweise in der DE-AS 1770202 beschrieben sind.

Bevorzugt werden phosgenierte Kondensate aus Anilin und Formaldehyd mit Polyphenylen-Methylen-Strukturen, technische Gemische aus Toluylendiisocyanaten, m-Phenylen diisocyanat und Verbindungen wie 4,4'- und 2,4-Diisocyanato-diphenylmethan, 4,4'-Diisocyanato-diphenylether, Naphthylen-(1,5)-diisocyanat, p-Phenylen-diisocyanat, 4,4'-Diisocyanato-diphenyl-dimethylmethan, analoge hydro-aromatische Diisocyanate wie 4,4'-Diisocyanato-dicyclohexylmethan sowie aliphatische Diisocyanate mit 2 bis 12 C-Atomen wie Hexamethylendiisocyanat und isomere Trimethylhexymethylendiisocyanate und von Isophoron abgeleitete Diisocyanate eingesetzt.

Besonders bevorzugt werden 4,4'- und 2,4'-Diisocyanato-diphenylmethan, 2,4- und 2,6-Toluylendiisocyanat, technische Gemische aus 2,4- und 2,6-Toluylendiisocyanat und deren Mischungen verwendet.

Anstelle der Isocyanate können auch Verbindungen eingesetzt werden, die unter den Reaktionsbedingungen als Isocyanate reagieren, vorzugsweise die Additionsverbindungen von Alkoholen, Phenolen und Lactamen, z.B. von Phenol, technischen Kresolgemischen und Caprolactam, Pyrrolidon oder von Gemischen aus den den Isocyanaten entsprechenden Aminen und aliphatischen und aromatischen Kohlensäureestern, z.B. Kohlensäurediethylester, Kohlensäurediphenylester und Ethylencarbonat, die auch bereits partiell miteinander umgesetzt sein können, oder z.B. auch die Polycarbodiimide aus den beschriebenen Diisocyanaten.

Zur Regulierung des Molekulargewichtes können auch monofunktionelle Isocyanate wie z.B. Phenylisocyanat, Toly isocyanat, Cyclohexylisocyanat, Stearylisocyanat, β,β,β,-Trifluorethylisocyanat und 3,5-Bis-trifluormethyl-phenylisocyanat oder die entsprechenden Amine eingesetzt werden.

Weiterhin können zur Regulierung des Molekulargewichtes unter den Reaktionsbedingungen monofunktionell reagierende Carbonsäuren wie z.B. Phthalsäure oder deren Anhydrid, Benzoesäure, Palmitinsäure und N-Phenyl- oder N-Dodecyl-trimellitimidsäure eingesetzt werden, die auch mit $C_1$-$C_6$-Alkyl oder Halogen (z.B. Fluor, Chlor) substituiert sein können.

Die Herstellung der erfindungsgemäß verwendbaren Polyamidimide kann in Lösungsmitteln erfolgen, wie dies in DE-AS 1770202 beschrieben wird. Bevorzugt werden als Lösungsmittel Phenole wie Phenol und technische Gemische aus o-, m- und p-Kresolen verwendet, weiterhin Lactame wie Caprolactam oder N-Methylcaprolactam, Tetramethylensulfon, Säureamide wie Dimethylacetamid und Dimethylformamid und Harnstoffe wie Tetramethylharnstoff, N,N'-Dimethyl-ethylen- und -propylenharnstoff. Besonders bevorzugt wird als Lösungsmittel N-Methylpyrrolidon eingesetzt.

Zur Herstellung der erfindungsgemäß verwendbaren Polyamidimide werden die Reaktionskomponenten mit oder ohne Lösungsmittel einige Minuten bis zu mehreren Stunden bei Temperaturen von 50 bis 380° C, vorzugsweise bei 80-340° C gehalten. Der Verlauf der Reaktion läßt sich beispiels weise über die Gasentwicklung, den Anstieg der Viskosität und die IR-Spektren verfolgen.

Eine bevorzugte Ausführungsform besteht darin, die Imidocarbonsäure in einem Lösungsmittel vorzulegen, das Diisocyanat in Substanz oder in Lösung im Verlaufe von 1-10, vorzugsweise von 2-6 Stunden bei Temperaturen von 80 bis 200° C, vorzugsweise von 110 bis 150° C, einzutragen und dann bei Temperaturen von 120 bis 230° C die Reaktion weiterzuführen.

Das Reaktionsgemisch kann bereits im Kessel zu einer noch fließfähigen Schmelze aufkonzentriert und dann weiter kondensiert werden

Eine bevorzugte Ausführungsform besteht darin, den restlichen Konzentrationsvorgang, gegebenenfalls unter Nachkondensation, in einem Eindampfextruder, gegebenenfalls unter Vakuum, bei Temperaturen von 240 bis 380° C, vorzugsweise von 280 bis 350° C, auszuführen.

Eine weitere bevorzugte Ausführungsform besteht darin, das Reaktionsprodukt durch Fällung oder Extraktion zu isolieren und dann in einem Extruder oder durch Festphasenkondensation auszukondensieren.

Als besonders geeignet haben sich erfindungsgemäße Polyamidimide mit einer relativen Viskosität, gemessen an einer 1%igen Lösung in Kresol bei 25° C, von 1,5 bis 3,0, vorzugsweise von 1,7 bis 2,5 mPas, erwiesen.

Im allgemeinen werden pro Val Isocyanat ein Val Imidocarbonsäure zur Umsetzung gebracht, doch sind auch Abweichungen von diesen Mengenverhältnissen möglich. In einigen Fällen hat sich ein Überschuß von 0,5-5 %, vorzugsweise von 1-3 % Isocyanat pro Val Imidocarbonsäure als vorteilhaft erwiesen.

Die Herstellung der erfindungsgemäßen Polymeren kann durch Katalysatoren beeinflußt werden, z.B. durch Basen wie Amine wie Triethylamin, 1,4-Diazabicyclo-[2,2,2]-octan, N- Ethylmorpholin, N-Methylimidazol und 2-Methylimidazol, durch anorganische und organische Metallverbindungen, insbesondere Verbindungen des Eisens, Bleis, Zinks, Zinns, Kupfers, Kobalts und Titans wie Eisen-(III)-chlorid, Kobaltacetat, Bleioxid, Bleiacetat, Zinnoctoat, Dibutylzinn-dilaurat, Kupferacetylacetonat, Titantetrabutylat, Alkaliphenolate und Natriumcyanid, durch Phosphorverbindungen wie Trialkylphosphin, Methylphospholinoxid, Triphenylphosphit, Polyphosphorsäure, Bor-Verbindungen wie Borsäure usw..

Für die erfindungsgemäße Verwendung können die beschriebenen Polyamidimide nach den Verfahren der Pulverprozeß-Technologie und besonders bevorzugt im Spritzgußverfahren verarbeitet werden. Weitere

erfindungsgemäße Anwendungen sind die Herstellung von Profilteilen durch Extrusion und von Folien nach dem (Blas) Exrusionsverfahren.

Die erfindungsgemäßen Polymeren zeichnen sich durch besondere Wärmeformbeständigkeit und Elastizität aus. Ihre Eigenschaften können für die verschiedenen Anwendungsgebiete durch Zumischung von nieder- und hochmolekularen Komponenten wie Füllstoffen, Pigmenten, Alterungsschutzmitteln, Gleitmitteln und Weichmachern, z.B. von Phenolen wie Dodecylphenol und Lactamen wie Dodecanlactam und weiteren Polymeren variiert werden.

## Beispiel 1

152,6 g Trimellitimidocapronsäure werden in 293 g N-Methylpyrrolidon vorgelegt. Dann wird unter Rühren bei 130 °C im Verlaufe von 3 Stunden eine Lösung von 122,5 g 4,4′-Diisocyanatodiphenylmethan und 4,22 g Dodecylisocyanat in 60 g N-Methylpyrrolidon zugetropft. Die Kondensation erfolgt unter Abspaltung von Kohlendioxid. Dann wird eine Stunde bei 130 °C und jeweils 2 Stunden bei 150, 170 und 190 °C gerührt. Anschließend werden 167 g N-Methylpyrrolidon unter Vakuum abdestilliert und danach noch 12 Stunden bei 21 °C gerührt. Man erhält das Polyamidimid als gummiartiges Harz mit einem Festgehalt von 65 Gew.-% und einer relativen Viskosität $\eta^{25}$ = 1,51, gemessen an einer 1%igen Lösung in m-Kresol bei 25 °C. Das IR-Spektrum zeigt für Imide charakteristische Banden bei 1720 und 1780 $cm^{-1}$. Die Glastemperatur beträgt Tg = 177 °C, das Schmelztemperaturmaximum Tg = 267 °C und die Schmelzwärme AHs = 48 J/g.

Eine Probe des Harzes wird im Stickstoffstrom in jeweils einer Stunde bei 250 und 300 °C eingedampft. Man erhält das Polyamidimid als schmelzbares, klares elastisches Harz mit einer Glastemperatur Tg = 171 °C und einer relativen Viskosität von $\eta^{25}$ = 1,85, gemessen an einer 1%igen Lösung in m-Kresol bei 25 °C.

## Beispiel 2

In einem Rührkessel werden 2114 g Trimellitimidocapronsäure und 50,3 g N-Dodecyltrimellitsäureimid n 3490 g N-Methylpyrrolidon vorgelegt. Dann wird bei 130 °C im Verlaufe von 3 Stunden eine Lösung von 121,8 g eines technischen Gemisches aus 80 % 2,4- und 20 % 2,6-Toluylendiisocyanat und 1593 g 4,4′-Diisocyanatodiphenylmethan in 1400 g N-Methylenpyrrolidon zugetropft.

Anschließend wird 1 Stunde bei 130 °C und jeweils 2 Stunden bei 150, 170 und 190 °C gerührt. Danach wird mit 1162 g N-Methylpyrrolidon auf einen Festgehalt von 35 Gew.-% verdünnt. Aus dieser Lösung wird das Polymere mit Methanol gefällt. Man erhält das Polyamidimid nach dem Trocknen als faseriges gelbes Pulver. Das Polymere zeigt bei 1720 und 1780 $cm^{-1}$ für Imide charakteristische Banden. Die relative Viskosität beträgt $\eta^{25}$ = 1,88, gemessen an einer 1%igen Lösung in m-Kresol bei 25 °C.

Eine Probe des Polyamidimids wird bei einer Temperatur von 220 °C und einem Druck von 200 bar zu einem klaren elastischen Formkörper mit einer Glastemperatur Tg = 172 °C verpreßt.

## Beispiel 3

In eine Lösung von 122 g Trimellitimidocapronsäure in 200 g N-Methylcaprolactam wird bei 130 °C im Verlaufe von 3 Stunden eine Lösung von 100 g 4,4′-Diisocyanatodiphenylmethan in 80 g N-Methylcaprolactam eingetropft. Anschließend wird noch eine Stunde bei 130 °C und jeweils 2 Stunden bei 150, 170, 190 und 200 °C und 15 Stunden bei 220 °C gerührt. Nach dem Erkalten wird das Polymere aus der Lösung mit Methanol ausgefällt. Man erhält das Polyamidimid als gelbes Pulver mit einer Glastemperatur Tg = 170 °C und einer relativen Viskosität $\eta^{25}$ = 1,65, gemessen an einer 1%igen Lösung in m-Kresol bei 25 °C.

Eine Probe des Harzes wird bei einer Temperatur von 220 °C und einem Druck von 200 bar zu einem klaren, elastischen Formkörper verpreßt.

## Beispiel 4

In 342 g N-Methylpyrolidon werden 151,1 g Trimellitimidocapronsäure, 3,59 g N-Dcdecyltrimellitsäureimid, 100 g 4,4′-Diisocyanatodiphenylmethan und 17,4 g eines technischen Gemisches aus 80 % 2,4- und

20 % 2,6-Toluylendiisocyanat eingetragen. Dann wird 4 Stunden bei 80°, 4 Stunden bei 120°C und jeweils 2 Stunden bei 130, 150, 170 und 190°C gerührt. Anschließend werden 233 g N-Methylpyrrolidon unter Vakuum abdestilliert und danach 10 Stunden bei 220°C gerührt. Das Polyamidimid wird als klare Schmelze erhalten mit einem Festgehalt von 65 Gew.-% und einer relativen Viskosität $\eta^{25}$ = 1,73, gemessen an einer 1%igen Lösung in m-Kresol.

Eine Probe des Harzes wird im Stickstoffstrom bei 250 und 310°C eingedampft. Man erhält ein klares schmelzbares Harz mit einer Glastemperatur Tg = 170°C und einer relativen Viskosität $\eta^{25}$ = 1,98, gemessen in m-Kresol.

Beispiel 5

In 240 g N-Methylpyrrolidon werden 149,6 g Trimellitimidocapronsäure, 7,18 g N-Dodecyltrimmeltsäureamid, 112,5 g 4,4'-Diisocyanatodiphenylmethan und 8,40 g Hexamethylendisocyanat eingetragen. Dann wird jeweils 4 Stunden bei 80, 120 und 130°C und jeweils 2 Stunden bei 150, 170 und 190°C gerührt. Die Kondensation erfolgt unter Abspaltung von Kohlendioxid. Dann werden unter Vakuum 160 g N-Methylpyrrolidon abdestilliert und nochmals 10 Stunden bei 220°C gerührt.

Man erhält das Polyamidimid als Schmelze mit einem Festgehalt von ca. 74 Gew.-% und einer relativen Viskosität $\eta^{25}$ = 1,48, gemessen an einer 1%igen Lösung in N-Methylpyrrolidon bei 25°C.

Die Schmelze wird im Stickstoffstrom bei 250 und 300°C eingedampft. Man erhält ein schmelzbares, elastisches Harz mit einer Glastemperatur von 165°C und einer $\eta_{rel}^{25}$ = 1,92, gemessen an einer 1%igen Lösung in m-Kresol bei 25°C.

Beispiel 6

1950 g Trimellitimidocarbonsäure werden in 3040 g N-Methylpyrrolidon gelöst. Dann werden bei 130°C im Verlaufe von 3 Stunden 1300 g 4,4'-Diisocyanatodiphenylmethan in 1040 g N-Methylpyrrolidon zugetropft. Danach wird eine Stunde bei 130°C gerührt, 12,4 g Phenyliso cyanat in 130 g N-Methylpyrrolidon zugetropft und noch eine Stunde bei 130°C gerührt. Anschließend wird Stickstoff übergeleitet und die Reaktion in jeweils 2 Stunden bei 150, 170 und 190°C zu Ende gerührt. Dann wird mit 1000 g N-Methylpyrrolidon auf einen Festgehalt von 35 Gew.-% verdünnt. Man erhält eine hellbraune viskose Lösung des Polyamidimids mit einer relativen Viskosität $\eta^{25}$ = 1,46, gemessen an einer 1 %igen Lösung in N-Methylpyrrolidon bei 25°C.

Eine probe der Polyamidimid-Lösung wird im Stickstoffstrom in jeweils einer Stunde bei 250 und 300°C eingedampft. Man erhält das Polyamidimid als hellbraune elastisches Harz mit einer relativen Viskosität $\eta^{25}$ = 2,08, gemessen an einer 1 %igen Lösung in m-Kresol.

In 5000 g der gemäß Beispiel hergestellten Polyamidimid-Lösung werden 1250 g Methanol eingerührt. Man erhält eine feste Masse, die in einer Zahnrad-Kolloidmühle mit Methanol vermahlen wird. Das Polyamidimid wird abgetrennt und nochmals mit Methanol extrahiert. Man erhält das Polyamidimid als gelbes Pulver mit einer relativen Viskosität $\eta^{25}$ = 1,76, gemessen an einer 1 %igen Lösung in m-Kresol, einer Glastemperatur Tg = 141°C, Schmelztemperaturmaxima Tg = 239 und 252°C und einer Schmelzwärme $\Delta$Hs = 50 J/g.

**Ansprüche**

1. Verwendung von Polyamidimiden, die durch Kondensation von organischen Diisocyanaten mit Imidocarbonsäuren (I) der Formel

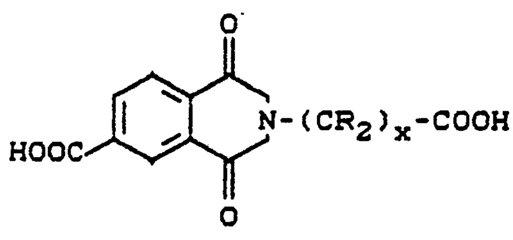

(I),

in welcher
R unabhängig voneinander für Wasserstoff (H), $C_1$-$C_6$-Alkyl steht,
x für die Zahl 1, 2, 3, 4, 5, 6, 7, 8, 9, 10, 11 oder 12 steht,
bei Temperaturen von 50 bis 380 °C, gegebenenfalls in einem Lösungsmittel und gegebenenfalls in Gegenwart eines Katalysators erhalten werden, zur Herstellung von Formkörpern.

2. Verwendung von Polyamidimiden nach Anspruch 1, dadurch gekennzeichnet, daß die Verformung im Spritzguß-Verfahren, nach Verfahren der Pulverprozeß-Technologie, nach Extrusionsverfahren erfolgt.

3. Vewrwendung von Polyamidimiden nach Anspruch 1, dadurch gekennzeichnet, daß bei der Herstellung die Imidocarbonsäuren (I) in einem Lösungsmittel vorgelegt werden und die Diisocyanate im Verlaufe von 1-10 Stunden anteilweise eingetragen werden.

4. Verwendung von Polyisocyanaten nach Anspruch 1, dadurch gekennzeichnet, daß das Polyamidimid in einem Lösungsmittel hergestellt wird, durch Fällung oder Extraktion aufkonzentriert wird und gegebenenfalls in einem Extruder oder in der Festphase nachkondensiert wird.

5. Verwendung von Polyamidimiden nach Anspruch 1, dadurch gekennzeichnet, daß in der Formel für die Imidocarbonsäuren (I) x die Zahlen 10 oder 11 bedeutet.

6. Verwendung von Polyamidimiden nach Anspruch 1, dadurch gekennzeichnet, daß als Imidocarbonsäure die ω-Trimellitimidocapronsäure und/oder die ω-Trimellitimidoundecansäure eingesetzt werden.

7. Verwendung von Polyamidimiden nach Anspruch 1, dadurch gekennzeichnet, daß für die Herstellung als Diisocyanate 4,4′- und 2,4′-Diisocyanatodiphenylmethan, 2,4- und 2,6-Toluylendiisocyanat technische Gemische aus 2,4- und 2,6-Toluylendiisocyanat und deren Mischungen verwendet werden.